(19) Europäisches Patentamt
European Patent Office
Office européen des brevets

(11) **EP 4 242 970 A1**

(12) **EUROPEAN PATENT APPLICATION**

(43) Date of publication:
**13.09.2023  Bulletin 2023/37**

(21) Application number: **22161746.7**

(22) Date of filing: **12.03.2022**

(51) International Patent Classification (IPC):
**G06T 11/00** (2006.01)    **G06T 7/00** (2017.01)

(52) Cooperative Patent Classification (CPC):
**G06T 11/006; G06T 7/0012;** G06T 2207/10104;
G06T 2207/20081; G06T 2207/20084;
G06T 2211/424

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Universität Bern
3012 Bern (CH)**

(72) Inventors:
• **Xue, Song
3010 Bern (CH)**

• **Shi, Kuangyu
3010 Bern (CH)**
• **Rominger, Axel
3010 Bern (CH)**

(74) Representative: **Braunpat AG
Peter Merian-Strasse 28
4052 Basel (CH)**

Remarks:
Claims 16-18 are deemed to be abandoned due to
non-payment of the claims fees (Rule 45(3) EPC).

(54) **COMPUTER-IMPLEMENTED METHOD FOR CT-FREE PET IMAGING**

(57)    The present invention concerns a computer-implemented method for generating an attenuation and scatter corrected positron emission tomography (ASC-PET) image using a trained model, the method comprising:

a. receiving a non-corrected positron emission tomography (NASC-PET) image;

b. generating, using a generative model, a simulated anatomy dependent correction map (s-ADCM) corresponding to the NASC-PET image, the generative model being trained in a conditional generative adversarial network (cGAN), wherein the generative model is further trained to process the NASC-PET image as an input and provide the s-ADCM as an output; and

c. generating the ASC-PET image by voxel-wise combining the s-ADCM map with the NASC-PET image.

The present invention relates also to a computer-implemented method for producing a trained model for generating anatomy dependent correction map (ADCM) using a conditional generative adversarial network, as well as a system and a computer program product for generating an attenuation and scatter corrected positron emission tomography image using a trained model.

Fig. 3

**Description**

Technical Field

The invention relates to a computer-implemented method for generating attenuation and scatter corrected positron emission tomography images. In particular, the present invention relates to method for generating attenuation and scatter corrected positron emission tomography images without the need of CT-imaging. Further, the invention relates to a system and computer program product for generating attenuation and scatter corrected positron emission tomography images.

Background of the invention

Positron emission tomography (PET) is a type of nuclear medicine imaging technique in which the patient is administered weakly radioactive tracer to non-invasively examine organ and tissue biochemistry in vivo. The tracer is most often fluorine 18 (18F) incorporated into a glucose molecule forming 18F-fluorodeoxyglucose (abbreviated to 18F-FDG). This tracer is similar to glucose and binds to tissues that consume large quantities of this sugar, such as cancerous tissues, heart muscle or the brain. Fluorine 18, which has a half-life of less than two hours, then temporarily emits radiation that can be followed in the patient's body using a special scanner, called a PET-scanner. Besides fluorine 18, other isotopes can be used such as oxygen 15 (15O), nitrogen 13 (13N), gallium 68 (68G) and carbon 11 (11C).

In PET, the radioactive atom (for example, fluorine 18) disintegrates by emitting a positron. The latter annihilates with an electron of the medium, after a very short path of less than one millimeter. This annihilation produces two gamma photons of 511 keV energy which leave in 180° opposite directions, which makes tomographic processing of the data possible. Sensors located all around the patient detect the coincident annihilation photons (i.e., those arriving at the same time), which makes it possible to identify the line on which the photons are emitted. PET imaging requires that a computer system reconstructs the images of the distribution of the tracer over part or all of the body in the form of a 2D image or a 3D object.

In order to reach relevant images, it is necessary to improve the image quality by using the principle of attenuation and scatter correction. When crossing the body, many gamma photons undergo attenuation and scattering related to the structures crossed and their thickness. To perform such a correction, PET scanners are nowadays coupled to an X-ray CT scanner (PET/CT scanner), which makes it possible to superimpose the functional image (PET image) on its precise anatomical location in the body (CT image). Furthermore, thanks to known reconstruction algorithm it is possible to extract from the CT images structural information allowing for the above-mentioned attenuation and scatter correction and thus for achieving better quality images, called attenuation and scatter corrected PET (ASC-PET) images from non-attenuation and non-scatter corrected PET (NASC-PET) images.

Ionizing radiation burden is however a major concern in the practice of positron emission tomography/computed tomography (PET/CT) imaging, which hampers its application in many situations. Among the radiation dose for PET/CT imaging, a considerable contribution originates from CT, which is typically, as explained above, used for the correction of attenuation and scattering in PET imaging. The burden from CT becomes even more evident with the advent of the long axial field of view (LAFOV) total-body PET scanners, which enables unprecedented levels of image quality and quantification accuracy with reduced radiopharmaceutical dose. Although low-dose attenuation correction (AC) CT imaging significantly reduces the radiation exposure (e.g., 1-2 mSv for whole-body scan), eliminating AC CT, i.e., CT-free PET imaging, is beneficial in many situations such as avoid redundancy with available anatomic information in the case e.g., of imaging of pediatric examinations, multiple PET tracers, pharmaceutical tests, and so on.

It is therefore no surprise that various suggestions have been made to generate attenuation and scatter corrected PET images while reducing the X-ray radiation dose patients are expose to. Numerous research efforts have been devoted to develop methods for CT-free PET correction, as for instance using magnetic resonance imaging to gain information on the anatomy of the patient and use this information for generating attenuation and scatter corrected PET images. However, magnetic resonance (MR)-based approaches yielded satisfactory results only in brain PET. Emission-based methods such as maximum likelihood estimation of activity and attenuation (MLAA) suffer from the so-called cross-talk artifact and high noise levels, even with the use of additional time of flight (TOF) information.

Inspired by the rapid expansion of artificial intelligence (AI)-based methods in various medical image analysis applications, many AI-based approaches for the CT-free PET imaging have been proposed, especially utilizing deep learning (DL) techniques. One proposed approach is to generate pseudo-CT images from non-corrected PET images as proposed in Dong X, Wang T, Lei Y, Higgins K, Liu T, Curran WJ, et al. Synthetic CT generation from non-attenuation corrected PET images for whole-body PET imaging. Phys Med Biol 2019, 64(21): 215016. Another approach is to directly generate corrected PET images from non-corrected ones as proposed for instance in US 2020/0311932 A1 or in Arabi H, Bortolin K, Ginovart N, Garibotto V, Zaidi H. Deep learning-guided joint attenuation and scatter correction in multitracer neuroimaging studies, Hum Brain Mapp 2020, 41(13): 3667-3679. However, a critical disadvantage of these AI methods is the limited capability in the application of heterogeneous domain of PET imaging. The spatial resolution and sensitivity vary between different scanners. More importantly, emerging tracers are evolving with different biodistributions. The rapid development in PET imaging makes it impossible to enumerate the heterogeneous application domain in the training data, which hampers the robustness and trustworthiness of the known AI-based AC methods.

It is therefore a goal of the present invention to propose a novel method, in particular a computer-implemented method, for generating CT-free attenuation and scatter corrected PET images. It is also a goal of the present invention to propose a device for generating CT-free attenuation and scatter corrected PET images.

Summary of the invention

Thus, the object of the present invention is to propose a novel method, in particular a computer-implemented method, for generating CT-free attenuation and scatter corrected PET images, with which the above-described drawbacks of the known methods are completely overcome or at least greatly diminished.

According to the present invention, these objects are achieved in particular through the elements of the four independent claims. Further advantageous embodiments follow moreover from the dependent claims and the description.

The goals of the present invention are in particular achieved by a computer-implemented method for generating an attenuation and scatter corrected positron emission tomography (ASC-PET) image using a trained model, the method comprising:

a. receiving a non-corrected positron emission tomography (NASC-PET) image;

b. generating, using a generative model, a simulated anatomy dependent correction map (s-ADCM) corresponding to the NASC-PET image, the generative model being trained in a conditional generative adversarial network (cGAN), wherein the generative model is further trained to process the NASC-PET image as an input and provide the s-ADCM as an output; and

c. generating the ASC-PET image by voxel-wise combining the s-ADCM with the NASC-PET image.

The idea to apply a two steps method generating first ADCM maps from NASC-PET images by means of a trained cGAN and second to use the generated ADCM images to generate ASC-PET instead of directly generating ASC-PET images from the NASC-PET images by means of a trained cGAN seems to be somewhat awkward at first sight. Initially, one would think that a single functional mapping, i.e., starting from the NASC-PET images and directly generating the ASC-PET images would be more effective and robust. As already mentioned, such an approach was indeed already suggested, for example by H. Arabi et al. (Arabi H, Bortolin K, Ginovart N, Garibotto V, Zaidi H. Deep learning-guided joint attenuation and scatter correction in multitracer neuroimaging studies. Hum Brain Mapp 2020, 41(13): 3667-3679). Surprisingly, however, the presently proposed "two-step approach", also called decomposition-based AI, yields noticeably improved image quality over the prior art "direct mapping approach" (see the figures and their corresponding description below for more details and quantitative comparisons). It is believed that the improved image quality that comes along with the decomposition of the transformation into two transformation components is based on the fact that a first transformation component relates to anatomy-independent textures (relating to tracers and diseases), and a second, usually low-frequency, transformation component relates to anatomy-dependent correction (relating to the general anatomy of a person). As shown by the inventors it is sufficient to generate by AI the anatomy-dependent correction component to achieve high quality CT-free ASC-PE images. Furthermore, by disementing the complex direct generation task into a "two-step" approach, the training of the neural network require less computational resources and training data, and result into a more robust and accurate model.

Furthermore, as it is shown below by quantitative analysis, the present method allows for producing CT-free ASC-PET images of equivalent or even better quality than CT ASC-PET images with the advantage of avoiding the exposition of the patients to CT radiation. Once the cGAN is trained with one homogenous set of r-ADCM and NASC-PET images, i.e., a set of images acquired with the same scanner and the same tracer, the generative model can be used to correct NASC-PET images acquired with different PET scanners and with different radioactive tracers. This is an enormous advantage since the cGAN does not need to be trained again when changing the scanner and/or the tracer used for acquiring the PET images.

It is important to emphasize here that while a voxel-wise combination of the s-ADCM images with the NASC-PET images represents a preferred method for combining these images, other methods. i.e., non-voxel wise, would be possible in the frame of the present invention.

In a first preferred embodiment of the present invention, the ASC-PET image is generated in step c. by voxel-wise multiplying the s-ADCM map with the NASC-PET image. The inventors have found out that a voxel-wise multiplication represent the most effective way for combining these images and lead to the most robust ASC-PET images. However, it is important to note that in the frame of the present invention other voxel-wise combinations of the s-ADCM images and the NASC-PET images are possible such as for instance convolution, addition or subtraction.

In a another preferred embodiment of the present invention, it is proposed that the cGAN is configured to train the generative model using a discriminative model, wherein values applied by the generative model and the discriminative model are established using adversarial training between the discriminative model and the generative model, and wherein the generative model and the discriminative model comprise respective convolutional neural networks.

In another preferred embodiment of the present invention, the conditional adversarial training comprises training the generative model to generate simulated ADCM (s-ADCM) from real anatomy dependent correction maps (r-ADCM) and NASC-PET images and training the discriminative model to classify the s-ADCM as simulated or real training data, and wherein output of the generative model is used for training the discriminative model and output of the discriminative model is used for training the generative model. The inventors have shown that by applying domain knowledge, i.e., by using r-ADCM images as well as corresponding NASC-PET images as training data for the cGAN, it is possible to achieve a rapid convergence of the training procedure as well as a better robustness of the s-ADCM, and thus of the ASC-PET images, generated by the trained generative model.

In a further preferred embodiment of the present invention, the r-ADCM are generated by decomposing the NASC-PET images with corresponding real attenuation and scatter corrected PET (r-ASC-PET) images. In contrast to conventional direct deep learning methods, it is here proposed to decompose the complex end-to-end generation of ASC-PET images into two components, an anatomy-independent textures (relating to tracers and diseases) and anatomy-dependent correction. Compared to direct approaches, estimation of only low-frequency anatomy-dependent correction using deep neural network is more efficient and robust, which is verified in tests of external imaging tracers on different scanners as detailed below.

In another preferred embodiment of the present invention, the r-ADCM are generated by voxel-wise dividing the r-ASC-PET images with the corresponding NASC-PET images. Voxel-wise division can be easily and quickly performed even for very large images. It has been shown that r-ADCM generated in this way are good training data for training the cGAN.

In a further preferred embodiment, the r-ASC-PET images are CT-corrected PET images. This is advantageous, since nowadays combined CT/PET scanners are readily available and PET images and CT images of the same patients can be acquired with the same device.

In a further preferred embodiment, the r-ASC-PET images are MRI-corrected PET images. This particularly advantageous since it allows for avoiding exposing the patients to CT radiation.

In a second aspect, the goals of the present invention are also achieved by a computer-implemented method for producing a trained model for generating anatomy dependent correction map (ADCM) using a conditional generative adversarial network, the method comprising establishing values of a generative model and a discriminative model of the conditional generative adversarial network using adversarial training, the adversarial training comprising:

i. training the generative model to generate simulated anatomy dependent correction maps (s-ADCM) image from real anatomy dependent correction maps (r-ADCM) and corresponding non-corrected attenuation and scattering positron emission tomography (NASC-PET) images; and

ii. training the discriminative model to classify the s-ADCM as simulated or real training data; wherein output of the generative model is used for training the discriminative model, and wherein output of the discriminative model is used for training the generative model; and

iii. outputting the generative model for use in generating a s-ADCM based on an input NASC-PET image, wherein an attenuation and scatter corrected positron emission tomography (ASC-PET) image can be generated by voxel-wise combining, advantageously multiplying, the s-ADCM with the corresponding NASC-PET image.

The inventors have shown that by using r-ADCM images and corresponding NASC-PET images as training data for the cGAN quick convergence can be obtained. Furthermore, the trained generative model can generate s-ADCM images that can be used to perform CT-free correction of NASC-PET images and thus produce high quality ASC-PET images without exposing the patient to CT radiations. The inventors could show that the trained model is very robust as it can produced relevant s-ADCM maps from NASC-PET images independently of the scanner and/or the tracer used for acquiring the PET image.

In a preferred embodiment of this aspect of the present invention, the generative model and the discriminative model comprise respective convolutional neural networks.

In another preferred embodiment of this second aspect of the present invention, the r-ADCM are generated by decomposing the NASC-PET images with corresponding real attenuation and scatter corrected PET (r-ASC-PET) images. In contrast to conventional direct deep learning methods, it is here proposed to decompose the complex end-to-end generation of ASC-PET images into two components, an anatomy-independent textures (relating to tracers and diseases) and anatomy-dependent correction. Compared to direct approaches, estimation of only low-frequency anatomy-dependent correction using deep neural network is more efficient and robust, which is verified in tests of external imaging tracers on different scanners as detailed below.

It is here important to note that the decomposition of the NASC-PET images with corresponding r-ASC-PET images can be performed by voxel-wise or non voxel-wise decomposition. Preferred voxel-wise decomposition methods are voxel-wise division, convolution, addition or subtraction.

In another preferred embodiment of the second aspect of the present invention, the r-ADCM are generated by voxel-wise dividing the r-ASC-PET images with the corresponding NASC-PET images. Voxel-wise division can be easily and quickly performed even for very large images. It has been shown that r-ADCM generated in this way are good training data for training the cGAN.

In a further preferred embodiment of the second aspect of the present invention, the r-ASC-PET images are CT-corrected PET images. This is advantageous, since nowadays combined CT/PET scanners are readily available and PET images and CT images of the same patients can be acquired with the same device.

In a further preferred embodiment of the second aspect of the present invention, the r-ASC-PET images are MRI-corrected PET images. This is particularly advantageous since it allows for avoiding exposing the patients to CT radiations.

In a third aspect of the present invention, the goals of the present invention are achieved by a system for generating an attenuation and scatter corrected positron emission tomography (ASC-PET) image using a trained model, the system comprising:

- a processing circuitry comprising at least one processor; and
- a storage medium comprising instructions, which when executed by the at least one processor, cause the processor to:

    i. receive a non-corrected positron emission tomography (NASC-PET) image;

    ii. generate, using a generative model, a simulated anatomy dependent correction map (s-ADCM) corresponding to the NASC-PET image, the generative model being trained in a conditional generative adversarial network (cGAN), wherein the generative model is further trained to process the NASC-PET image as an input and provide the s-ADCM as an output; and

    iii. generate an ASC-PET image by voxel-wise combining, advantageously multiplying, the s-ADCM with the NASC-PET image.

The proposed system, in particular the processing circuitry, is designed and arranged in a way that it performs, at least at times, a method according to the present disclosure. Such a system will show, at least in analogy, the same features and advantages as previously described. Furthermore, the system may be modified, at least in analogy, according to the present disclosure.

In a preferred embodiment of the third aspect of the present invention, the conditional generative adversarial network is configured to train the generative model using a discriminative model, wherein values applied by the generative model and the discriminative model are established using adversarial training between the discriminative model and the generative model, and wherein the generative model and the discriminative model comprise respective convolutional neural networks.

In another preferred embodiment of the third aspect of the present invention, the conditional adversarial training comprises training the generative model to generate a simulated ADCM (s-ADCM) from a real anatomy dependent correction map (r-ADCM) and a NASC-PET image and training the discriminative model to classify a s-ADCM as simulated or real training data, and wherein output of the generative model is used for training the discriminative model and output of the discriminative model is used for training the generative model.

Finally, in a fourth aspect, the goals of the present invention are achieved by a computer program product that, when installed on a programmable machine, in particular on a processing circuitry of system according to the present invention, performs a method according to the present invention. Such a computer program product will show, at least in analogy, the same features and advantages as previously described. Furthermore, the computer program product may be modified, at least in analogy, according to the present disclosure.

Brief description of the drawings

Fig. 1 is a flowchart of a computer-implemented method for generating an attenuation and scatter corrected positron emission tomography (ASC-PET) image using a trained model according to an embodiment of the present invention;

Fig. 2 is a flowchart of a computer-implemented method for producing a trained model for generating anatomy dependent correction maps (ADCM) according to an embodiment of the present invention;

Fig. 3 illustrates the complete workflow for generating attenuation and scatter corrected positron emission tomography images according to an embodiment of the present invention also showing example images of actual patients for the different steps of the workflow;

Fig. 4 shows a comparison of various physical metrics for various correction methods, including the method according to the present invention, for different commercially available scanners and for various tracers;

Fig. 5 shows a comparison of patient images taken on commercially available positron emission tomographs, the images being corrected using different correction techniques, including the method according to the present invention;

Fig. 6 show another comparison of various physical metrics for various correction methods, including the method according to the present invention, for different commercially available scanners and for various tracers;

Fig. 7 shows a joint histogram analysis depicting the correlation between activity concentration of ASC-PET generated with the present method and NASC-PET versus reference CT ASC-PET images; and

Fig. 8 illustrates schematically a system for generating attenuation and scatter corrected positron emission tomography (ASC-PET) images using a trained model according to an embodiment of the present invention.

Detailed description of a preferred embodiment

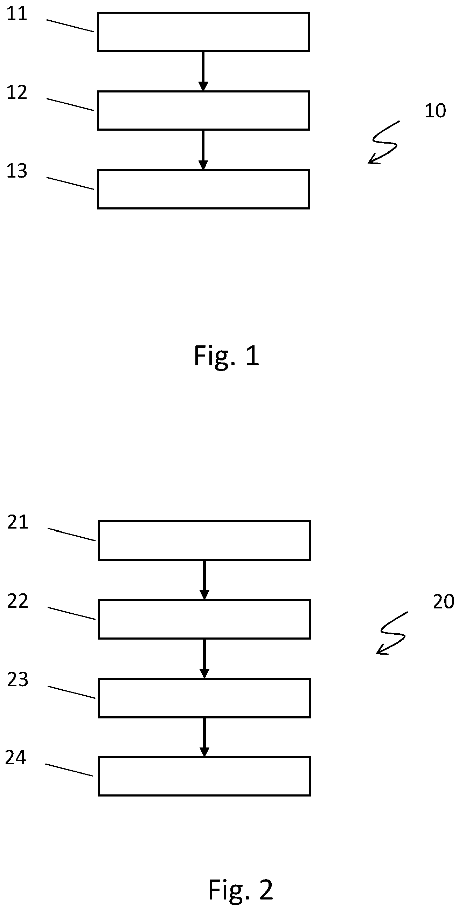

Fig. 1 shows a flowchart of an embodiment of a computer-implemented method 10 for generating an attenuation and scatter corrected positron emission tomography (ASC-PET) image using a trained model according to the present invention. Firstly, non-attenuation and non-scatter corrected positron emitting tomography (NASC-PET) images are acquired in step 11 by means of a PET scanner, advantageously a combined PET/CT scanner. To this means and as known in the prior art, radioactive material which is radiolabelled or "tagged" with a positron emitting radio nuclei is administered to a patient to non-intrusively examine organs and tissue biochemistry in vivo. Examples for positron-emitting radionuclides are fluoride-18, gallium-68, carbon-11, yttrium-86, yttrium-90, and iodine-124. Sometimes they are referred to as "tracers", "radio tracers", "radiopharmaceuticals", "probes" or the like. The radioactive atom disintegrates by emitting a positron that will annihilate with an electron of the medium, after a very short path of less than one millimeter. This annihilation produces two gamma photons of 511 keV energy which leave in 180° opposite directions, which makes tomographic processing of the data possible. Sensors located all around the patient detect the coincident annihilation photons (i.e., those arriving at the same time), which makes it possible to identify the line on which the photons are emitted.

In order to reach relevant images PET images, it is, as mentioned above, necessary to improve the image quality by using the principle of attenuation and scattering correction. When crossing the body, many gamma photons undergo attenuation and scattering related to the structures crossed and their thickness.

In a second step 12, a simulated anatomy dependent correction map (s-ADCM) corresponding to the NASC-PET image, is generated using a generative model, the generative model being trained in a conditional generative adversarial network (cGAN), wherein the generative model is further trained to process the NASC-PET image as an input and provide the s-ADCM as an output. For details of the training of the cGAN see below the description of Figure 2.

In a third step 13, the desired attenuation and scatter corrected PET (ASC-PET), or AI corrected PET, image is generated by voxel-wise multiplying the s-ADCM map with the corresponding NASC-PET image according to the following equations:

For all the *coordinates* in $I^{NASC-PET}$:

$$\text{If } I^{NASC-PET}[coordinate] < 1 \text{ Then}$$

$$I^{s\text{-}ADCM}[coordinate] = 1$$

$$\text{I}^{\text{AI ASC-PET}}[coordinate] = \text{I}^{\text{NASC-PET}}[coordinate] * \text{I}^{\text{s-ADCM}}[coordinate]$$

Figure 2 illustrates schematically a computer-implemented method 20 for producing a trained model for generating simulated anatomy dependent correction map (s-ADCM) using a conditional generative adversarial network, wherein the method comprises establishing values of a generative model and a discriminative model of the conditional generative adversarial network using adversarial training. In a first step 21, NASC-PET images of patients are acquired by means of a dedicated scanner, advantageously a combined PET/CT scanner. In a second step 22, CT images of the same patients are acquired and in a third step 23, the CT images are used to create real attenuation and scatter corrected PET (r-ASC-PET) images. In a fourth step 24, real anatomy dependent correction maps (r-ADCM) are generated by voxel-wise dividing the r-ASC-PET with the corresponding NASC-PET images according to the following equations: For all the *coordinates* in $\text{I}^{\text{NASC-PET}}$:

$$\text{If } \text{I}^{\text{NASC-PET}}[coordinate] < 1 \text{ Then}$$

$$\text{I}^{\text{NASC-PET}}[coordinate] = 1$$

$$\text{I}^{\text{r-ADCM}}[coordinate] = \frac{\text{I}^{\text{r-ASC-PET}}[coordinate]}{\text{I}^{\text{NASC-PET}}[coordinate]}$$

In a fifth step 25, the generative model is trained to generate simulated anatomy dependent correction map (s-ADCM) images from the r-ADCM and the corresponding NASC-PET images. In a sixth step 26, a discriminative model is trained to classify a s-ADCM as simulated or real training data; wherein output of the generative model is used for training the discriminative model, and wherein output of the discriminative model is used for training the generative model. In a seventh step 27, the generative model is outputted for use in generating s-ADCM based on an input NASC-PET image. As explained above in connection with the description of Figure 1, the desired ASC-PET image is advantageously generated by voxel-wise multiplying the s-ADCM with the NASC-PET image. Here, it is however important to note that instead of CT data, it is possible to use MRI data, especially MRI images, to generate r-ASC-PET images used as input for the training of the cGAN.

In principle, the objective of the generative model is to be able to approximate the corresponding ADCM for a given NASC-PET image, while the discriminator aims to distinguish between the simulated ADCM (s-ADCM) and real input correction maps (r-ADCM). This can be considered like a competing game between two players: one tries to fool the other with generating the correction map as well as possible, while the other player (the discriminator) attempts to maximize its capability of not being fooled. In more detail:

Generative model: The goal of the generative model is to be able to approximate the corresponding $\text{I}^{\text{ADCM}}$ for a given $\text{I}^{\text{NASC-PET}}$. In the presently described embodiment the network of the generative model consists of sixteen convolutional layers, which includes eight down-sampling layers for the encoder and eight up-sampling layers for the decoder. Pooling layers are replaced with stride convolutions to avoid information loss.

Discriminative model: The discriminative model aims to distinguish between the $\text{I}^{\text{s-ADCM}}$ generated by the generative model, and real input $\text{I}^{\text{r-ADCM}}$. The discriminative model takes either a real ratio map or a simulated one as input and determines whether the input is real or not. The architecture of the discriminative network according to the presently described embodiment contains eight convolution blocks and a fully connected block is connected at the end, with sigmoid as activation to output a probability, to determine whether the input is real or synthetic.

Further, in the presently described embodiment, the extended objective function of the cGAN can be described as:

$$\min_{G} \max_{D} V(D, G)$$

$$= \sum_{i=1}^{n} \log\left(D_{\theta_D}(I^{NASC-PET}, I^{r-ADCM})\right)$$

$$+ \log\left(1 - D_{\theta_D}\left(I^{NASC-PET}, G_{\theta_G}(I^{NASC-PET};)\right)\right)$$

In contrast to conditioning the generation of images on random noise drawn from specific distribution, this objective function takes an input of NASC-PET image. Furthermore, the adversarial loss of the model also includes voxel-wise content loss alongside image-wise loss, to ensure spatial alignment of the generated ratio map (s-ADCM) with the ground truth (r-ADCM):

$$L_{\text{content loss}} = \sum_{i=1}^{n} \left| I^{s\text{-ADCM}} - I^{r\text{-ADCM}} \right|_{2}$$

where $I^{s\text{-ADCM}} = G_{\theta_G}(I^{NASC-PET})$

Therefore, the overall objective function is defined as:

$$\min_{G} \max_{D} V(D, G) + \lambda V(G)$$

$$= \sum_{i=1}^{n} \log\left(D_{\theta_D}(I^{NASC-PET}, I^{r-ADCM})\right)$$

$$+ \log\left(1 - D_{\theta_D}\left(I^{NASC-PET}, G_{\theta_G}(I^{NASC-PET})\right)\right)$$

$$+ \lambda \left| G_{\theta_G}(I^{NASC-PET}) - I^{r-ADCM} \right|_{2}$$

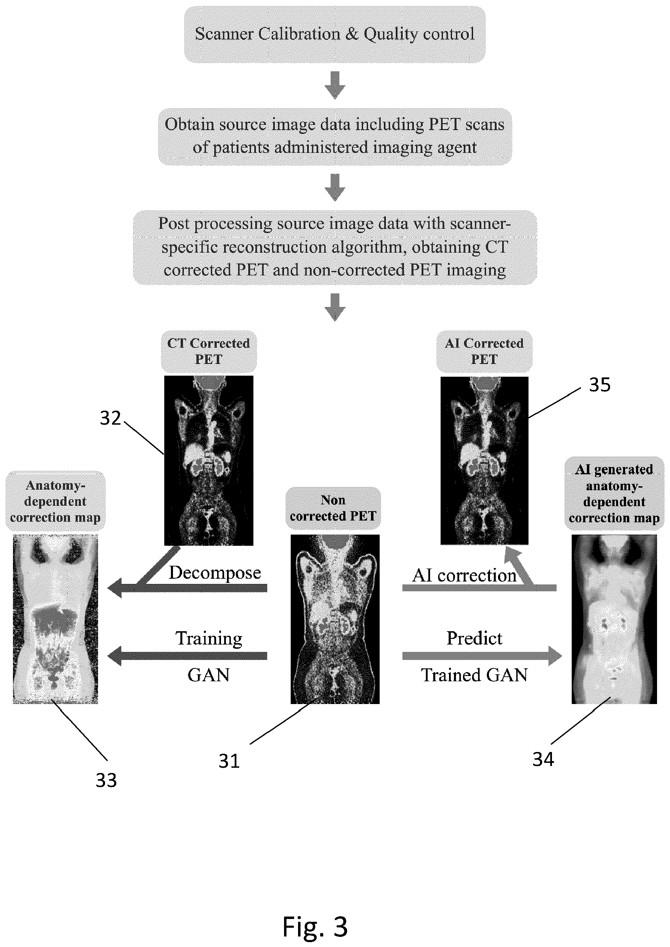

Fig. 3 illustrates the overall workflow for the CT-free correction of PET images. In this Figure, a non-corrected PET (NASC-PET) image 31 and the corresponding CT corrected PET image (ASC-PET) 32 of a patient are shown. These images 31, 32 are used to generate a real anatomy-dependent correction map 33 (r-ADCM). The cGAN is trained by means of the r-ADCM image 33 and the NASC-PET image 31. Once the cGAN is trained, it is used to generate a s-ADCM image 34 from a NASC-PET image 31. The AI-corrected PET image (ASC-PET) 35 is finally generated by voxel-wise multiplying the s-ADCM image with the NASC-PET image.

The proposed computed-implemented workflow, combining the proposed computer-implemented method for generating a CT-free ASC-PET image by means of a trained cGAN and the computer-implemented method for producing a trained cGAN, was developed based on 470 subjects who underwent 18F-fluorodeoxyglucose (18F-FDG) PET and scanned with Biograph Vision 450 (Vision 450, Siemens Healthineers) in Shanghai (SH). The trained model was tested model with four test datasets to evaluate the robustness, which includes 51 subjects from Vision 450, 98 subjects from UI uMI 780 (UI, United Imaging), 104 subjects from GE Discovery MI (DMI, General Electric Healthcare) collected at SH, as well as 62 subjects from Biograph Vision 600 (Vision 600, Siemens Healthineers) collected at Bern. Detailed patient demographics are given in Table 1.

| | Training | Valid | Cross Scanner | | | Cross tracer | | | |
|---|---|---|---|---|---|---|---|---|---|
| **Source** | SIEMEN S Healthine ers Vision 450 (SH)-FDG | SIEMEN S Healthine ers Vision 450 (SH)-FDG | SIEMEN S Healthine ers Vision 600 (Bern)-FDG | UI uMI 780 (SH)-FDG | GE Discover y MI (SH)-FDG | SIEMEN S Healthine ers Vision 450 (SH)-$^{68}$Ga-FAPI (SH) | SIEMEN S Healthine ers Vision 450 (SH)-$^{68}$Ga-DOTA-TATE | SIEMEN S Healthine ers Vision 600 (Bern)-$^{68}$Ga-DOTA- TOC | SIEMEN S Healthine ers Vision 600 (Bern)-$^{18}$F-PSMA |
| **Number of Patients** | 470 | 51 | 62 | 98 | 104 | 7 | 17 | 8 | 12 |
| **Total dose (MBq)** | 337.8±63 .4 | 305.1±66 .0 | 254.4±51 .7 | 265.8±3 2.1 | 336.0±6 6.7 | 152.9±21 .2 | 95.0±17. 3 | 152.0±7. 3 | 241.6±15 .5 |
| **Post-injection time (min)** | 75.7±32. 1 | 82.3±18. 6 | 78.4±13. 4 | 66.4±20. 1 | 80.9±27. 5 | 54.1±7.3 | 60.1±18. 7 | 96.9±20. 1 | 152.7±23 .3 |
| **Gender (Male/Fem ale)** | 263/207 | 25/26 | 27/35 | 49/49 | 51/53 | 5/2 | 9/8 | 5/3 | 12/0 |
| **Age (Year)** | 58.2±14. 3 | 56.8±19. 0 | 64.0±14. 1 | 59.4±13. 5 | 57.6±13. 0 | 59.0±14. 7 | 41.4±14. 0 | 60.9±15. 0 | 74.5±6.4 |
| **Weight (kg)** | 62.8±10. 9 | 62.2±13. 2 | 71.5±13. 7 | 61.3±12. 0 | 61.3±11. 1 | 63.1±11. 6 | 69.6±15. 5 | 80.9±23. 4 | 84.9±14. 2 |

EP 4 242 970 A1

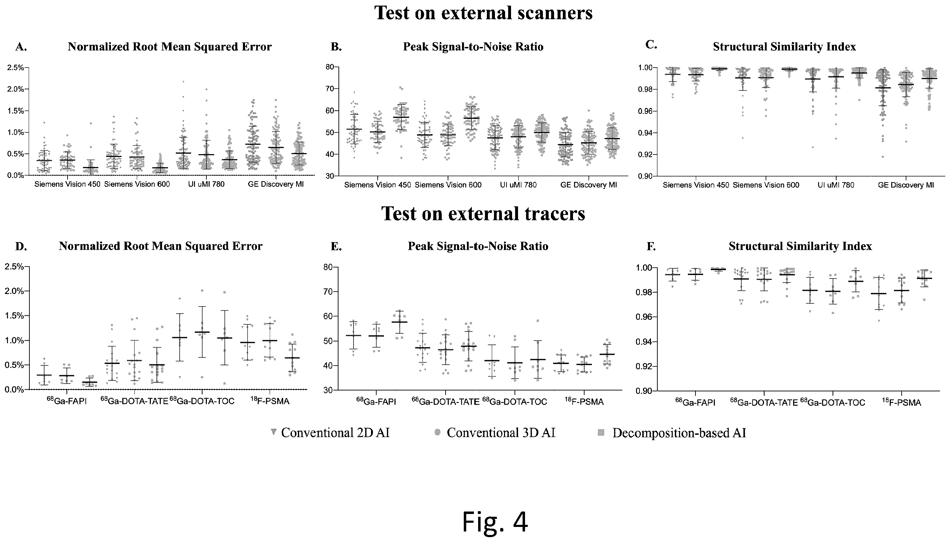

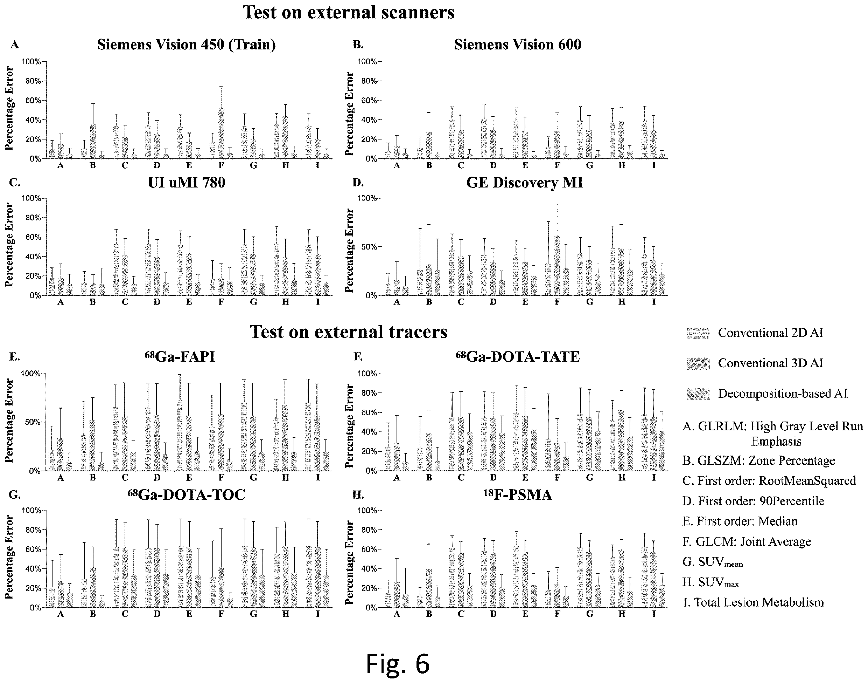

Figure 4 A-C provides quantitative accuracy comparison of the attenuation scatter corrected PET (ASC-PET) images generated by means of the present method to the original CT-based attenuation scatter corrected PET (CT ASC-PET) images on four different scanners. The here proposed AI based workflow was compared to two others direct 2D and 3D AI methods designed in a traditional end-to-end generation manner, which generate ASC-PET directly from non-attenuation and non-scatter corrected images (NASC-PET) with either 2D or 3D network. As shown in the Figure 4 A-C, all three AI methods were capable of some degree of attenuation and scattering correction for different scanners, but the method of the present invention significantly outperformed the other two on all scanners (p<0.05). Specifically in terms of normalized root mean squared error (NRMSE), the present method improved 47.5% over Direct 2D and 49.1% over Direct 3D on Vision 450, and 60.0% over Direct 2D and 58.4% over Direct 3D on Vision 600, while on both scanners maintained a similar accuracy (p=0.88). When applied to GE Discovery MI and UI, the present method still outscored the other two more than 20%. Results of peak signal-to-noise ratio (PSNR) and structural similarity index measurement (SSIM) of 18F-FDG imaging on the four different scanners showed the same tendency as the NRMSE results. Furthermore, clinical imaging parameters such as SUVmean, SUVmax, total lesion metabolism, as well as the most relevant radiomics features within sphere volume of interest (VOI) of different organs (liver, kidney, and lung) were measured. Figure 6 A-D shows the average percentage error of each feature on all scanners, calculated in reference to the CT ASC-PET, which demonstrates that the present method outperformed the other two on all scanners regarding local metrics as well.

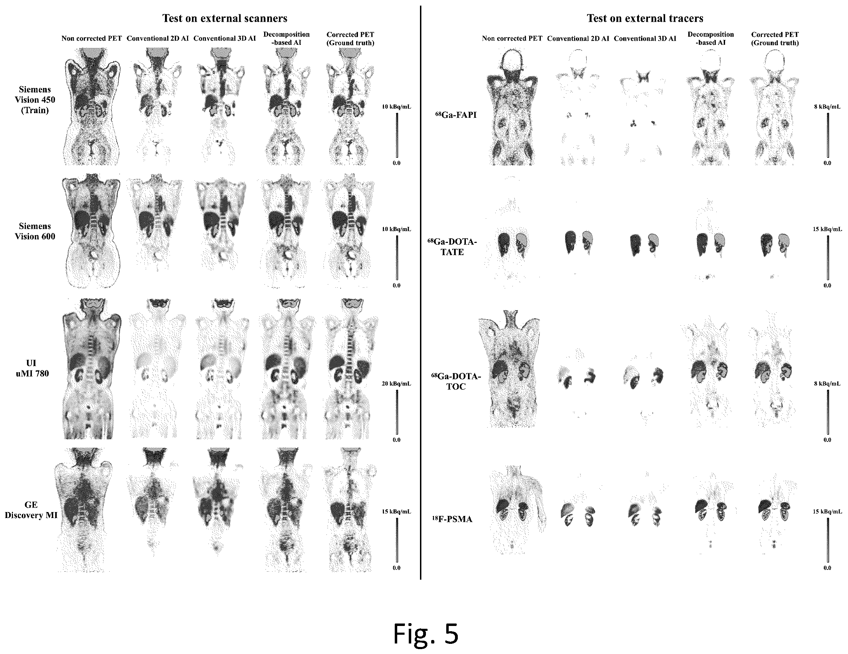

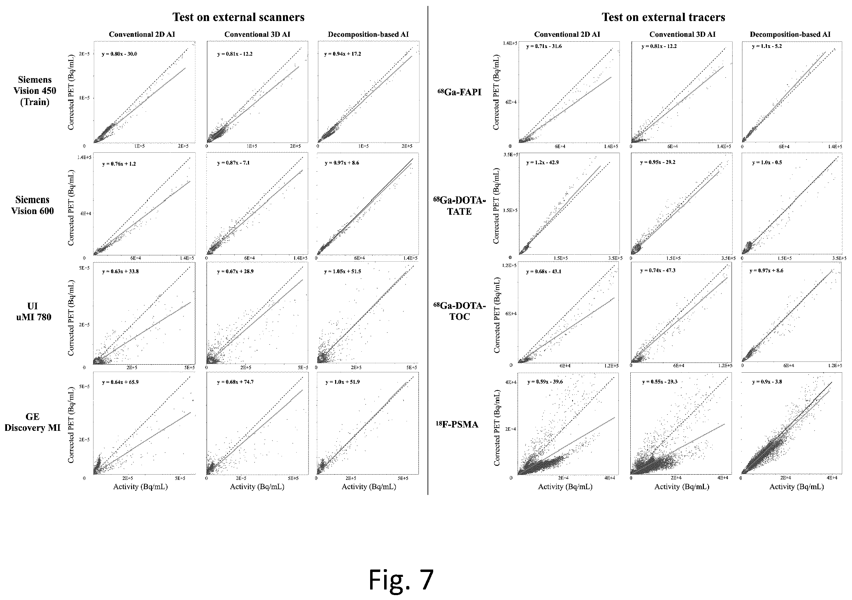

In addition to the quantitative evaluation, as shown in Figure 5, we showed head-to-head comparison of a representative imaging example of NASC-PET, ASC-PET images of the present methods and two AI methods known in the Art CT ASC-PET, as well as joint histogram analysis depicting the correlation between activity concentration of AI ASC-PET and NASC-PET versus reference CT ASC-PET in Figure 7. The here proposed decomposition-based AI workflow provided image quality comparable with CT ASC-PET and preserved more detailed information and less noise were observed compared to Direct 2D and 3D. The joint histogram analysis of an exemplary subject (Figure 7) exhibited voxel-wise similarity between reference CT ASC-PET and decomposition-based AI ASC-PET with slopes of 0.94, 0.97 and 1.05 for the scanners Vision 450, Vision 600 and UI respectively.

The here proposed AI workflow, which is based on 470 subjects with 18F-FDG PET, was further applied to four external test dataset to evaluate the robustness on the cross-tracer settings, which included 7 subjects with 68Ga-fibroblast-activation protein inhibitors (68Ga-FAPI) and 17 subjects with 68Ga-DOTA-Tyr-octreotate (68Ga-DOTA-TATE) from Vision 450, as well as 8 subjects with 68Ga-DOTA-Tyr(3)-octreotide (68Ga-DOTA-TOC) and 12 subjects with 18F-prostate-specific membrane antigen (18F-PSMA) from Vision 600. Figure 4 D-F provides quantitative accuracy of the present method and other two AI correction method to the CT ASC-PET on four different tracers. All three AI methods were capable of some degree of attenuation and scattering correction for different tracers, but the present method significantly outperformed the other two on 68Ga-FAPI and 18F-PSMA (p<0.05). Specifically in terms of normalized root mean squared error (NRMSE), Decomposition-based AI improved 49.0% over Direct 2D and 47.1% over Direct 3D on 68Ga-FAPI, and 32.3% over Direct 2D and 35.3% over Direct 3D on 18F-PSMA. While the advantage on 68Ga-DOTATATE and 68Ga-DOTATOC was less evident. Results of PSNR and SSIM showed the same tendency as the NRMSE results. Figure 6 E-H shows the average percentage error of each feature on all tracers, calculated in reference to the CT ASC-PET, which demonstrates that the here proposed decomposition AI workflow outperformed the other two on all tracers regarding local metrics.

In contrast to anatomical imaging, PET imaging exhibits a large heterogeneity in its application domain. The development of instrumentation continues to improve the physical characteristics such as spatial resolution, sensitivity and anatomical coverage which can enhance the texture details in the images, and the robustness of AI-based attenuation and scattering correction (AC) methods maybe affected by changes in these physical characteristics. Furthermore, emerging tracers are introduced in PET imaging frequently and are being evaluated in clinical trials. Different tracers exhibit different pharmacokinetics leading to a variety of biodistributions. A proper AI-based AC method should be applicable for this large variety of scanners and tracers. The test results of the here proposed method demonstrate that it is applicable for external scanners and tracers, which have not been touched during the training. The robust application in different scanners and tracers illustrates the potential of clinical adoption of the proposed method. The credibility in the application of clinically established tracers can be improved with texture preservation. The extensibility for new tracers meets the demand of reduced radiation burden in the clinical tests of tracer developments.

For the quantitative comparison between the methods, several metrics were employed and calculated as follows:

- Normalized root mean squared error NRMSE:

$$NRMSE = \frac{\sqrt{\sum_{i=1}^{n} \frac{(y_{true} - y_{pred})^2}{n}}}{max(y_{true}) - min(y_{pred})}$$

where $y_{true}$ is the CT ASC-PET and $y_{pred}$ is the AI ASC-PET image, and it measures the overall pixel-wise intensity deviation between these two.

- The peak signal-to-noise-ratio PSNR is defined as:

$$PSNR = 10 \log_{10} \left( \frac{VR^2}{\left\| y_{true} - y_{pred} \right\|_2^2} \right)$$

where V is the total amounts of voxels and R represents the range of the intensity of the CT ASCT-PET image, and $\left\| y_{true} - y_{pred} \right\|_2^2$ computes the mean squared error between it and the AI ASC-PET image. The pixel-wise quantities are easily calculated and compared and have straightforward interpretations.

- The structural similarity index measurement SSIM is defined as:

$$SSIM(x, y) = \frac{(2\mu_x \mu_y + C_1)(2\sigma_{xy} + C_2)}{(\mu_x^2 + \mu_y^2 + C_1)(\sigma_x^2 + \sigma_y^2 + C_2)}$$

where $\mu_x$, $\mu_y$ are the averages of images CT ASC-PET and AI ASC-PET, and $\sigma_x$, $\sigma_y$ are their standard deviations, respectively. $C_1$ and $C_2$ are two positive constants to avoid a null denominator. Theoretically, image with lower NRMSE, higher PSNR and SSIM closer to 1 represent higher synthesis quality.

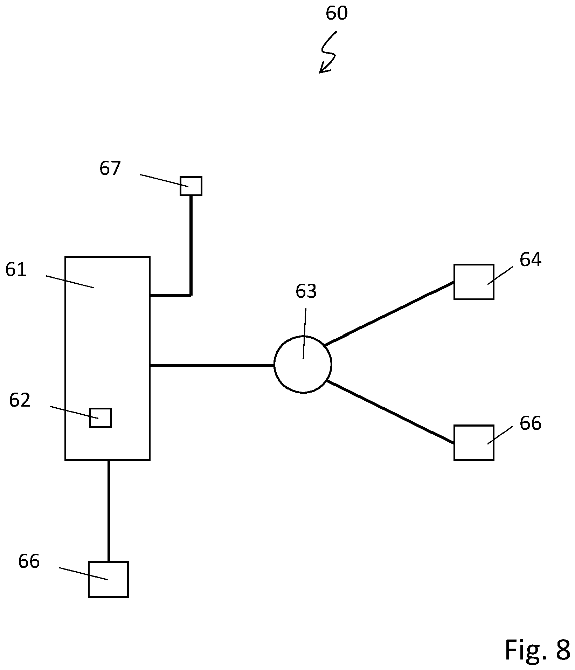

Finally, Figure 8 shows a system 60 for performing the presently suggested method. The system 60 comprises a processing circuitry 61 with a processor 62. The processing circuitry 61 can be a workstation and the processor 62 a standard microprocessor or GPU, for example. The processing circuitry 61 is designed and arranged in a way that it performs the previously described method.

Furthermore, the processing circuitry 61 is connected to a PET scanner 64 and a CT scanner 65 via a network 63. The processing circuitry 61 is connected to a monitor 66, for displaying the result.

To be able to process the data of various patients, the processing circuitry 61 is further connected to a storage array 67, for example a RAID array. Here, not only the image data can be stored, but also the training parameters of the cGAN.

It shall be possible that individual features from the detailed embodiments may be used individually and/or in combination with other individual features from the detailed embodiments, to be compliant with the generic description of the present disclosure.

**Claims**

1. A computer-implemented method for generating an attenuation and scatter corrected positron emission tomography (ASC-PET) image using a trained model, the method comprising:

   a. receiving a non-corrected positron emission tomography (NASC-PET) image;
   b. generating, using a generative model, a simulated anatomy dependent correction map (s-ADCM) corresponding to the NASC-PET image, the generative model being trained in a conditional generative adversarial network (cGAN), wherein the generative model is further trained to process the NASC-PET image as an input and provide the s-ADCM as an output; and
   c. generating the ASC-PET image by voxel-wise combining the s-ADCM map with the NASC-PET image.

**2.** The method of claim 1, wherein in step c. the NASC-PET image is generated by voxel-wise multiplying the s-ADCM map with the NASC-PET image.

**3.** The method of claim 1 or 2, wherein the cGAN is configured to train the generative model using a discriminative model, wherein values applied by the generative model and the discriminative model are established using adversarial training between the discriminative model and the generative model, and wherein the generative model and the discriminative model comprise respective convolutional neural networks.

**4.** The method of claim 3, wherein the conditional adversarial training comprises training the generative model to generate simulated ADCM (s-ADCM) from real anatomy dependent correction maps (r-ADCM) and NASC-PET images and training the discriminative model to classify s-ADCM as simulated or real training data, and wherein output of the generative model is used for training the discriminative model and output of the discriminative model is used for training the generative model.

**5.** The method of claim 4, wherein the r-ADCM are generated by decomposing the NASC-PET images with corresponding real attenuation and scatter corrected PET (r-ASC-PET) images.

**6.** The method of claim 5, wherein the r-ADCM are generated by voxel-wise dividing the r-ASC-PET images with the corresponding NASC-PET images.

**7.** The method of claim 5 or 6, wherein the r-ASC-PET images are CT-corrected PET images.

**8.** The method of claim 5 or 6, wherein the r-ASC-PET images are MRI-corrected PET images.

**9.** A computer-implemented method for producing a trained model for generating anatomy dependent correction map (ADCM) using a conditional generative adversarial network, the method comprising establishing values of a generative model and a discriminative model of the conditional generative adversarial network using adversarial training, the adversarial training comprising:

i. training the generative model to generate simulated anatomy dependent correction maps (s-ADCM) image from real anatomy dependent correction maps (r-ADCM) and corresponding non-corrected attenuation and scattering positron emission tomography (NASC-PET) images; and
ii. training the discriminative model to classify the s-ADCM as simulated or real training data; wherein output of the generative model is used for training the discriminative model, and wherein output of the discriminative model is used for training the generative model; and
iii. outputting the generative model for use in generating a s-ADCM based on an input NASC-PET image, wherein an attenuation and scatter corrected positron emission tomography (ASC-PET) image can be generated by voxel-wise combining, advantageously multiplying, the s-ADCM with the corresponding NASC-PET image.

**10.** The method of claim 9, wherein the generative model and the discriminative model comprise respective convolutional neural networks.

**11.** The method of claim 9 or 10, wherein the r-ADCM are generated by decomposing the NASC-PET images with corresponding real attenuation and scatter corrected PET (r-ASC-PET) images.

**12.** The method of claim 11, wherein the r-ADCM are generated by voxel-wise dividing the r-ASC-PET images with the corresponding NASC-PET images.

**13.** The method of claim 11 or 12, wherein the r-ASC-PET images are CT-corrected PET images.

**14.** The method of claim 11 or 12, wherein the r-ASC-PET images are MRI-corrected PET images

**15.** A system for generating an attenuation and scatter corrected positron emission tomography (ASC-PET) image using a trained model, the system comprising:

- a processing circuitry comprising at least one processor; and
- a storage medium comprising instructions, which when executed by the at least one processor, cause the processor to:

i. receive a non-corrected positron emission tomography (NASC-PET) image;

ii. generate, using a generative model, a simulated anatomy dependent correction map (s-ADCM) corresponding to the NASC-PET image, the generative model being trained in a conditional generative adversarial network (cGAN), wherein the generative model is further trained to process the NASC-PET image as an input and provide the s-ADCM as an output; and

iii. generate an ASC-PET image by voxel-wise combining, advantageously multiplying, the s-ADCM with the NASC-PET image.

16. The system of claim 15, wherein the conditional generative adversarial network is configured to train the generative model using a discriminative model, wherein values applied by the generative model and the discriminative model are established using adversarial training between the discriminative model and the generative model, and wherein the generative model and the discriminative model comprise respective convolutional neural networks.

17. The system of claim 16 or 17, wherein the conditional adversarial training comprises training the generative model to generate a simulated ADCM (s-ADCM) from a real anatomy dependent correction map (r-ADCM) and a NASC-PET image and training the discriminative model to classify a s-ADCM as simulated or real training data, and wherein output of the generative model is used for training the discriminative model and output of the discriminative model is used for training the generative model.

18. Computer program product that, when installed on a programmable machine, in particular on a processing circuitry of system according to any of claims 15 to 17, performs a method according to any of claims 1 to 8 or a method according to any of claims 9 to 13.

11 

12 

13 

10

Fig. 1

21 

22 

23 

24 

20

Fig. 2

Fig. 3

Fig. 4

Fig. 5

Fig. 6

Fig. 7

60

67

61

63

64

62

66

66

Fig. 8

**EUROPEAN SEARCH REPORT**

Application Number

EP 22 16 1746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HWANG DONGHWI ET AL: "Comparison of deep learning-based emission-only attenuation correction methods for positron emission tomography", EUROPEAN JOURNAL OF NUCLEAR MEDICINE AND MOLECULAR IMAGING, SPRINGER BERLIN HEIDELBERG, BERLIN/HEIDELBERG, vol. 49, no. 6, 9 December 2021 (2021-12-09), pages 1833-1842, XP037800712, ISSN: 1619-7070, DOI: 10.1007/S00259-021-05637-0 [retrieved on 2021-12-09] * abstract; figure 1 * * sections: Network architectures; Attenuation Maps; Discussion * | 1-15 | INV. G06T11/00 G06T7/00 |
| A,D | DONG XUE ET AL: "Synthetic CT generation from non-attenuation corrected PET images for whole-body PET imaging", PHYSICS IN MEDICINE & BIOLOGY, vol. 64, no. 21, 4 November 2019 (2019-11-04), page 215016, XP055982742, DOI: 10.1088/1361-6560/ab4eb7 Retrieved from the Internet: URL:https://iopscience.iop.org/article/10.1088/1361-6560/ab4eb7> [retrieved on 2022-11-22] * the whole document * | 1-15 | |

TECHNICAL FIELDS SEARCHED (IPC)

G06T

-/--

The present search report has been drawn up for all claims

| Place of search | Date of completion of the search | Examiner |
|---|---|---|
| Munich | 22 November 2022 | Rimassa, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

**EP 22 16 1746**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARABI HOSSEIN ET AL: "The promise of artificial intelligence and deep learning in PET and SPECT imaging", PHYSICA MEDICA, ACTA MEDICA EDIZIONI E CONGRESSI, ROME, IT, vol. 83, 1 March 2021 (2021-03-01), pages 122-137, XP086596387, ISSN: 1120-1797, DOI: 10.1016/J.EJMP.2021.03.008 [retrieved on 2021-03-22] * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 22 November 2022 | Rimassa, Simone |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200311932 A1

**Non-patent literature cited in the description**

- **DONG X ; WANG T ; LEI Y ; HIGGINS K ; LIU T ; CURRAN WJ et al.** Synthetic CT generation from non-attenuation corrected PET images for whole-body PET imaging. *Phys Med Biol,* 2019, vol. 64 (21), 215016
- **ARABI H ; BORTOLIN K ; GINOVART N ; GARI-BOTTO V ; ZAIDI H.** Deep learning-guided joint attenuation and scatter correction in multitracer neuroimaging studies. *Hum Brain Mapp,* 2020, vol. 41 (13), 3667-3679

- **ARABI H ; BORTOLIN K ; GINOVART N ; GARI-BOTTO V ; ZAIDI H.** Deep learning-guided joint attenuation and scatter correction in multitracer neuroimaging studies. *Hum Brain Mapp,* 2020, vol. 41 (13), 3667-3679